# EUROPEAN PATENT APPLICATION

(11) **EP 3 116 210 A1**
(43) Date of publication of application: **11.01.2017**
(21) Application number: 16177828.7
(22) Date of filing: 04.07.2016
(51) Int. Cl.: H04N 1/00, G06F 9/44, G06F 3/0481, G06F 3/0484

(54) **USER INTERFACE WITH DYNAMICALLY CHANGING BANNER REGION**

(30) Priority: 08.07.2015 JP 2015137164
(71) Applicant: Ricoh Company, Ltd., Tokyo 143-8555 (JP)
(72) Inventor: Umezawa, Asaki, Ohta-ku, Tokyo 143-8555 (JP); Fukumaru, Sachiko, Ohta-ku, Tokyo 143-8555 (JP); Sasayama, Kazuki, Ohta-ku, Tokyo 143-8555 (JP)
(74) Representative: White, Duncan Rohan

(57) **Abstract**

An information processing apparatus (100) including a display unit (101) configured to display a message for indicating information to a user, includes a determination unit (412) configured to determine, when displaying the message on the display unit (101), whether to display the message on the display unit (101) using a predetermined display style; and a display control unit (413) configured to display, when it has been determined by the determination unit (412) that the message is to be displayed on the display unit (101) using the predetermined display style, the message on the display unit (101) while dynamically changing the area of a region containing the message.

## Description

### 1. Field of the Invention

The present disclosure relates to information processing apparatuses, image processing apparatuses, media, and user interfaces.

### 2. Description of the Related Art

Image processing apparatuses such as multifunction peripherals (MFPs) display various messages for users on operational screens to indicate guidance of operational methods, errors, and the like.

Also, a technology has been known for image processing apparatuses that displays various messages in an easily recognizable way at a low cost (see, for example, Patent Document 1).

However, it has been often the case with such a conventional technology that a message displayed on an image processing apparatus is unnoticed by a user. For example, a message displayed by a banner on an upper portion of an operational screen of an image processing apparatus may not be noticed by a user, depending on the size of the banner.

In view of the above, an embodiment in the present disclosure has an object to display a message by a display aspect that is easily noticed by a user.

### SUMMARY OF THE INVENTION

According to at least an embodiment in the present disclosure, an information processing apparatus including a display unit configured to display a message for indicating information to a user, includes a determination unit configured to determine, when displaying the message on the display unit, whether to display the message on the display unit by a predetermined display aspect; and a display control unit configured to display, when it has been determined by the determination unit that the message is to be displayed on the display unit by the predetermined display aspect, the message on the display unit while dynamically changing a region having the message reflected.

According to an embodiment in the present disclosure, a message can be displayed by a display aspect that is easily noticed by a user.

### BRIEF DESCRIPTION OF THE DRAWINGS

FIG. 1 is a diagram illustrating an example of a hardware configuration of an image processing apparatus according to a first embodiment;
FIG. 2 is a diagram illustrating an example of a hierarchical structure of a group of programs included in an operational unit and a main unit of an image processing apparatus according to the first embodiment;
FIG. 3 is a diagram illustrating an example of a functional configuration of an operational unit of an image processing apparatus according to the first embodiment;
FIG. 4 is a diagram illustrating an example of message information stored in a message information storage unit;
FIG. 5 is a flowchart of an example of a process for displaying a message according to the first embodiment;
FIG. 6 is a diagram illustrating an example of a case in which a message is displayed by a dialogue;
FIGs. 7A-7E are diagrams illustrating an example of a case in which messages are displayed by a banner;
FIGs. 8A-8E are diagrams illustrating another example of the case in which messages are displayed by a banner;
FIG. 9 is a flowchart illustrating an example of a process for stopping banner-displaying according to the first embodiment;
FIGs. 10A-10C are diagrams illustrating an example of a case in which banner-displaying is stopped;
FIGs. 11A-11D are diagrams illustrating an example of a case in which an icon for redisplaying is displayed;
FIGs. 12A-12C are diagrams illustrating an example of a case in which an icon for redisplaying changes;
FIG. 13 is a flowchart of an example of a process for displaying a message according to a second embodiment;
FIGs. 14A-14B are diagrams illustrating an example of a case in which multiple messages are displayed by a banner;
FIG. 15 is a flowchart illustrating an example of a process for stopping banner-displaying according to the second embodiment; and
FIGs. 16A-16C are diagrams illustrating an example of a case in which a banner corresponding to an icon for redisplaying is redisplayed.

### DETAILED DESCRIPTION OF THE EMBODIMENTS

In the following, embodiments will be described with reference to the drawings.

### [First embodiment]

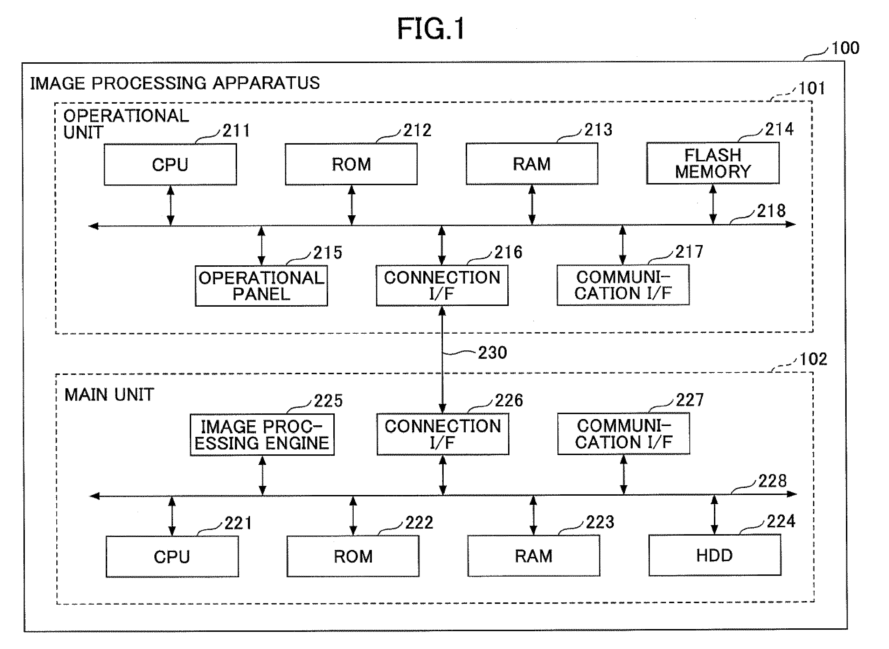

First, a hardware configuration of an image processing apparatus 100 according to a first embodiment will be described with reference to FIG. 1. FIG. 1 is a diagram illustrating an example of a hardware configuration of the image processing apparatus 100 according to the first embodiment.

The image processing apparatus 100 in the embodiment is a multifunction peripheral or the like that includes image processing functions, for example, a copy function, a scan function, a FAX function, and a print function.

As illustrated in FIG. 1, the image processing apparatus 100 includes an operational unit 101 and a main unit 102.

The operational unit 101 is used when a user performs various operations such as selecting an image processing function to be executed by the main unit 102; inputting various setting values to execute the image processing function; inputting an execution command to start executing the image processing function; and switching a display screen.

Also, the operational unit 101 displays various messages about image processing functions in response to a request from the main unit 102. For example, if an error occurs when an image processing function is executed, the operational unit 101 displays a message (an error message) corresponding to the error. Also, for example, if a setting value for executing an image processing function needs to be changed, the operational unit 101 displays a message (a guidance message) for prompting the user to change the setting value.

The main unit 102 executes various processes such as execution of an image processing function in response to various operations by the user on the operational unit 101. Also, the main unit 102 requests the operational unit 101 to display various messages.

As illustrated in FIG. 1, the operational unit 101 of the image processing apparatus 100 includes a central processing unit (CPU) 211, a read-only memory (ROM) 212, and a random access memory (RAM) 213. The operational unit 101 also includes a flash memory 214, an operational panel 215, a connection interface (I/F) 216, and a communication I/F 217. These hardware units are mutually connected via a bus 218.

The CPU 211 is a processor that executes various programs stored in the ROM 212 or the flash memory 214 by using the RAM 213 as a work area, to control the entire operational unit 101.

The ROM 212 is a non-volatile semiconductor memory (a storage device) that holds data even when power is turned off. The RAM 213 is a volatile semiconductor memory (a storage device) that temporarily stores programs and data.

The flash memory 214 is a non-volatile recording medium to store various programs (for example, programs to implement the embodiment) executed by the CPU 211, and various data items.

The operational panel 215 is used by the user when performing various operations. Also, the operational panel 215 displays various messages. In other words, the operational panel 215 displays, for example, graphical user interface (GUI) display screens for the user to perform various operations with respect to various functions of the image processing apparatus 100, and information about processed results by the image processing apparatus 100 and the like (error messages, guidance messages, etc.).

The connection I/F 216 is an interface to communicate with the main unit 102 via a communication path 230. An interface compliant with, for example, USB (Universal Serial Bus) standards, may be used for the connection I/F 216.

The communication I/F 217 is an interface to communicate with other devices. An interface compliant with, for example, Wi-Fi standards, may be used for the communication I/F 217.

Similarly, the main unit 102 of the image processing apparatus 100 includes a CPU 221, a ROM 222, and a RAM 223. The main unit 102 also includes a hard disk drive (HDD) 224, an image processing engine 225, a connection I/F 226, and a communication I/F 227. These hardware units are mutually connected via a bus 228.

The CPU 221 is a processor that executes various programs stored in the ROM 222 or the flash memory 224 by using the RAM 223 as a work area, to control the entire main unit 102.

The ROM 222 is a non-volatile semiconductor memory (a storage device) that holds data even when power is turned off. The RAM 223 is a volatile semiconductor memory (a storage device) that temporarily stores programs and data.

The HDD 224 is a non-volatile recording medium to store various programs (for example, programs to implement the embodiment) executed by the CPU 211, and various data items.

The image processing engine 225 is hardware to execute image processing to implement various image processing functions such as a copy function, a scan function, a FAX function, and a print function.

The image processing engine 225 may include, for example, a scanner that optically captures a document to generate image data, a plotter that executes printing on a sheet member such as a sheet, and a FAX communication device that executes FAX communication. The image processing engine 225 may also include, for example, a finisher that sorts out printed sheet members, and an ADF (automatic document feeder) that feeds documents automatically.

The connection I/F 226 is an interface to communicate with the operational unit 101 via the communication path 230. An interface compliant with, for example, USB standards, may be used for the connection I/F 226.

The communication I/F 227 is an interface to communicate with other devices. An interface compliant with, for example, Wi-Fi standards, may be used for the communication I/F 227.

By having the above hardware configuration, the image processing apparatus 100 in the embodiment can implement various processes, as will be described later.

Note that in FIG. 1, although an example of a configuration is illustrated in which the image processing apparatus 100 includes the operational unit 101, the configuration is not limited to that; for example, an information processing terminal such as a tablet terminal, a smart phone, a cellular phone, and a PDA, may be function as an operational unit of the image processing apparatus 100. In other words, these information processing terminals may communicate with the image processing apparatus 100 via the communication I/F 217 of the operational unit 101 or the communication I/F 227 of the main unit 102, to be capable of controlling the image processing apparatus 100.

### <Hierarchical structure of group of programs of image processing apparatus>

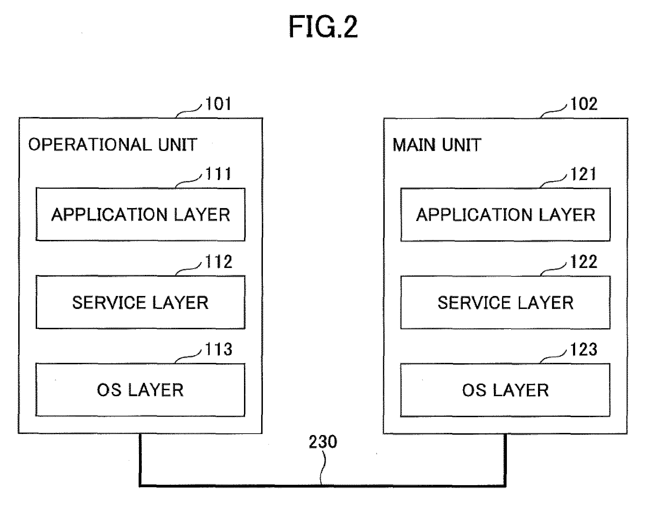

Next, a hierarchical structure of a group of programs included in the operational unit 101 and the main unit 102 of the image processing apparatus 100 will be described with reference to FIG. 2. FIG. 2 is a diagram illustrating an example of hierarchical structures of respective groups of programs included in the operational unit 101 and the main unit 102 of the image processing apparatus 100 according to the first embodiment.

FIG. 2 illustrates the hierarchical structure of a group of programs included in the operational unit 101 (the ROM 212 and the flash memory 214), and the hierarchical structure of a group of programs included in the main unit 102 (the ROM 222 and the HDD 224).

First, the hierarchical structure of the group of programs included in the main unit 102 (the ROM 222 and the HDD 224) will be described. The group of programs included in the main unit 102 may be generally classified into an application layer 121, a service layer 122, and an OS layer 123.

A program classified into the application layer 121 is a program that operates on a hardware resource(s) to implement an image processing function. Specifically, a copy application, a scan application, a FAX application, and a print application may be considered.

A program classified into the service layer 122 is a program that lies between the application layer 121 and the OS layer 123. Such a program plays a role as an interface through which a program in the application layer 121 uses hardware resources included in the main unit 102, and states of the hardware resources included in the main unit 102 are indicated.

Specifically, a service-layer program may receive operational requests to the hardware resources, and may arbitrate the received operational requests. Also, a service-layer program may transmit an error detected in a hardware resource as error information. Note that operational requests received by the service layer 122 include, for example, operational requests for image processing by the image processing engine 225 (an operational request for capturing by a scanner, an operational request for printing by a plotter, and the like).

Note that the role of the interface executed by a program classified into the service layer 122 is also served for the application layer 111 of the operational unit 101. In other words, a program classified into the application layer 111 of the operational unit 101 accesses the service layer 122, to operate on the hardware resources of the main unit 102 so as to realize the image processing functions.

A program classified into the OS layer 123 is a program called basic software that provides basic functions to control the hardware resources included in the main unit 102. A program classified into the OS layer 123 receives an operational request to a hardware resource from a program classified into the application layer 121 via a program classified into the service layer 122, and executes processing in response to the operational request. Also, after a program classified into the OS layer 123 has started running, the program may receive an error detected in a hardware resource, and transfers the error information to the service layer 122.

Next, the hierarchical structure of a group of programs included in the operational unit 101 (the ROM 212 and the flash memory 214) will be described. Similar to the main unit 102, the group of programs included in the operational unit 101 may be generally classified into an application layer 111, a service layer 112, and an OS layer 113.

However, functions provided by programs classified into the application layer 111, and types of operational requests that can be received by the service layer 112, are different from the functions and the types on the main unit 102. Programs classified into the application layer 111 of the operational unit 101 mainly provide user interface functions for various operations and displaying.

Note that it is assumed in the embodiment that the operational unit 101 and the main unit 102 have respective OSes (Operating Systems) that operate independently. Also, as long as the operational unit 101 and the main unit 102 can communicate with each other, the OSes do not need to be the same type. It is possible, for example, that the operational unit 101 uses Android (trademark) as the OS whereas the main unit 102 uses Linux (trademark) as the OS.

In this way, the image processing apparatus 100 may be controlled by different OSes in the operational unit 101 and the main unit 102, respectively. Therefore, communication between the operational unit 101 and the main unit 102 is not executed as inter-process communication in a single apparatus, but executed as communication between different information processing apparatuses. For example, an operation to transmit operational information that represents various operations received by the operational unit 101 from the user to the main unit 102, and an operation to transmit a display request by which the main unit 102 sends a command to the operational unit 101 to display a display screen, correspond to such communication.

However, the image processing apparatus 100 in the embodiment is not limited to have the operational unit 101 and the main unit 102 run different types of OSes, but the operational unit 101 and the main unit 102 may run the same type OS. Also, the image processing apparatus 100 in the embodiment is not limited to have the operational unit 101 and the main unit 102 run respective OSes independently, but the operational unit 101 and the main unit 102 may have a single OS run.

### <Functional configuration>

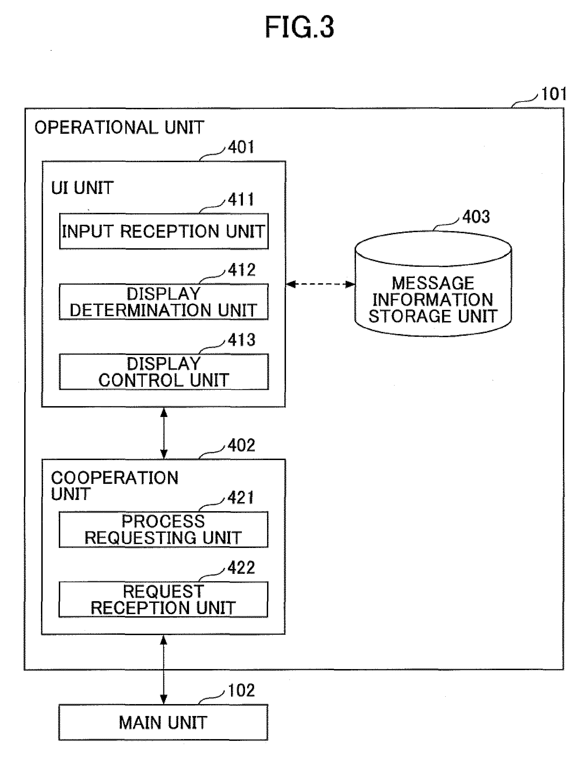

Next, a functional configuration of functions implemented by the group of programs included in the application layer 111 of the operational unit 101 of the image processing apparatus 100, will be described with reference to FIG. 3. FIG. 3 is a diagram illustrating an example of a functional configuration of the operational unit 101 of the image processing apparatus 100 according to the first embodiment.

As illustrated in FIG. 3, the operational unit 101 of the image processing apparatus 100 includes a UI unit 401 and a cooperation unit 402. These units are implemented by processes that the group of programs included in the application layer 111 have the CPU 211 execute.

The operational unit 101 of the image processing apparatus 100 also includes a message information storage unit 403. The storage unit can be implemented by the flash memory 214.

The UI unit 401 receives an operation from the user, and controls displaying for the user. The UI unit 401 includes an input reception unit 411, a display determination unit 412, and a display control unit 413. These units will be described later in detail.

The cooperation unit 402 transmits a request for executing an image processing function to the main unit 102, and receives from the main unit 102 a request for displaying a message such as an error message and a guidance message on the operational panel 215. The cooperation unit 402 also receives a request for releasing a message, to stop displaying the message that is being displayed based on a request for displaying the message. The cooperation unit 402 includes a process requesting unit 421 and a request reception unit 422. These units will be described later in detail.

The message information storage unit 403 stores message information for determining a display aspect used when displaying a message on the operational panel 215, based on a request for displaying the message transmitted from the main unit 102. The message information stored in the message information storage unit 403 will be described later in detail.

The input reception unit 411 receives various operations from the user. The input reception unit 411 receives, for example, input operations of various setting values to have the main unit 102 execute image processing functions, and input operations of execution commands to have the main unit 102 start executing the image processing functions.

In response to receiving from the main unit 102 a request for displaying a message, the display determination unit 412 determines a display aspect used on the operational panel 215 for displaying the message based on the request for displaying the message, based on the message information stored in the message information storage unit 403.

Following a determination result by the display determination unit 412, the display control unit 413 displays the message based on the request for displaying the message transmitted from the main unit 102 on the operational panel 215. At this moment, the display control unit 413 displays the message on the operational panel 215 by the display aspect following the determination result by the display determination unit 412.

Also, based on a request for releasing a message transmitted from the main unit 102, the display control unit 413 stops displaying the message that is being displayed by a predetermined display aspect on the operational panel 215.

Once an input operation of an execution command to start executing the image processing function, has been received by the input reception unit 411, the process requesting unit 421 generates a job to execute the image processing function on the main unit 102, and transmits the job to the main unit 102. Based on the job received from the operational unit 101, the main unit 102 executes the image processing according to the job.

The request reception unit 422 receives requests for displaying a message and requests for releasing a message from the main unit 102. Here, for example, if a processed result of image processing that has been executed on the main unit 102 includes an error, the main unit 102 transmits a request for displaying a message on the operational panel 215, to the operational unit 101 to display an error message corresponding to the error. Also, for example, if a setting value input on the operational unit 101 includes an error, the main unit 102 transmits to the operational unit 101 a request for displaying a message so as to display a guidance message on the operational panel 215, to prompt the user to change the setting value to a correct value. Further, for example, if an error having occurred on the main unit 102 has been solved, the request reception unit 422 transmits a request for releasing a message to stop displaying an error message that is being displayed on the operational panel 215 to the operational unit 101.

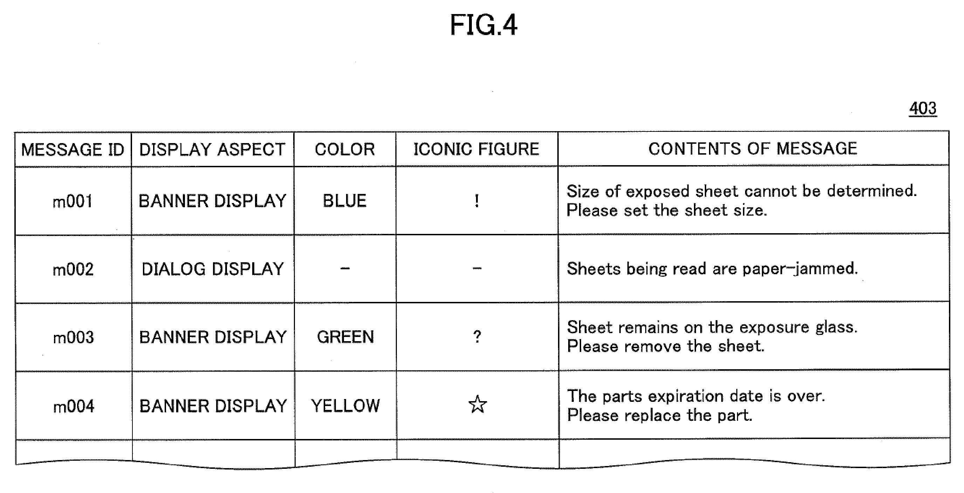

Here, message information stored in the message information storage unit 403 will be described in detail with reference to FIG. 4. FIG. 4 is a diagram illustrating an example of message information stored in the message information storage unit 403.

As illustrated in FIG. 4, the message information stored in the message information storage unit 403 includes, as data items, a message ID, a display aspect, a color, an iconic figure, and contents of a message. The message ID is identification information to uniquely identify a message information record. The display aspect is a display aspect used for displaying the contents of a message on the operational panel 215 of the operational unit 101.

In the embodiment, it is assumed that the display aspect may be, for example, banner-displaying or dialog-displaying. The dialog-displaying is a display aspect by which a dialogue reflecting a message represented by the contents of a message is displayed on the operational panel 215 of the operational unit 101. On the other hand, the banner-displaying is a display aspect by which a banner reflecting a message represented by the contents of a message is displayed on the operational panel 215 of the operational unit 101.

The color is specified for the display aspect of the banner-displaying, and is a color of a displayed banner, and an operational object for redisplaying the banner (also referred to as an "icon for redisplaying", as will be described later). The iconic figure is specified for the display aspect of the banner-displaying, and is a part displayed on a banner and an icon for redisplaying. The contents of a message is a string or the like that represents contents of a message to be displayed on the operational panel 215 of the operational unit 101.

Note that it is preferable that the color matches the contents of a message. For example, if the contents of a message represent an error message, the color may be set to "red", whereas if the contents of a message represent a guidance message, the color may be set to "yellow".

Also, it is preferable that the iconic figures have different shapes depending on types of contents of messages. For example, if the contents of a message represent an error message, the iconic figure may be "!", and if the contents of a message represent a guidance message, the iconic figure may be a star mark.

Here, if the display aspect is the "banner-displaying", the banner to be displayed reflects, for example, a message whose contents imply low emergency, or a message that requests the user to perform an operation to change a setting. On the other hand, if the display aspect is the "dialog-displaying", the dialog to be displayed reflects, for example, a message whose contents imply high emergency, such as an occurrence of paper jam. In this way, compared to a dialogue, a banner is used for indicating to the user a message (information) that implies lower emergency or importance.

In addition, in the embodiment, if the display aspect is the "banner-displaying", the banner reflecting a message represented by the contents of a message is displayed on the operational panel 215 of the operational unit 101 while the banner is changed dynamically. In other words, in the embodiment, if the display aspect is the "banner-displaying", the banner reflecting a message represented by the contents of a message is displayed on the operational panel 215 of the operational unit 101 by an animation. This makes it possible in the embodiment for the user to easily notice a message displayed by a banner.

### <Details of processes>

Next, processes of the image processing apparatus 100 will be described in detail according to the first embodiment.

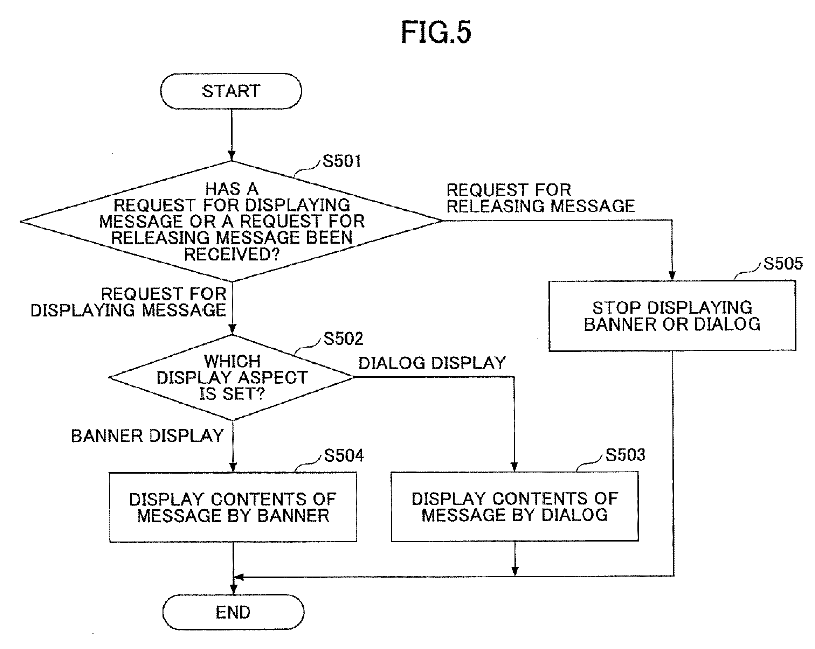

First, a process will be described with reference to FIG. 5 in which the operational unit 101 of the image processing apparatus 100 displays, in response to receiving a request for displaying a message from the main unit 102, the message that corresponds to the request for displaying a message on the operational panel 215 of the operational unit 101. FIG. 5 is a flowchart of an example of the process for displaying a message according to the first embodiment.

The cooperation unit 402 of the operational unit 101 determines whether a request for displaying a message or a request for releasing a message from the main unit 102 has been received by the request reception unit 422 (Step S501). Note that the cooperation unit 402 ends the process if receiving from the main unit 102 a message other than a request for displaying a message or a request for releasing a message.

Here, a request for displaying a message may be transmitted from the main unit 102 to the operational unit 101 in the following cases.

For example, if the user performs a FAX transmission operation on the operational panel 215, the input reception unit 411 of the UI unit 401 receives the operation, the process requesting unit 421 of the cooperation unit 402 generates a FAX transmission job, and the job is transmitted to the main unit 102. Then, having received the FAX transmission job, the main unit 102 executes a FAX transmission process based on the job. At this moment, if an error occurs in the FAX transmission process, a request for displaying a message to display an error message corresponding to the error on the operational panel 215 is transmitted to the operational unit 101.

Also, for example, if an expiration date of predetermined parts included in the main unit 102 (for example, toner) has passed, a request for displaying a message to display a guidance message on the operational panel 215 to prompt the user to change the corresponding part, is transmitted to the operational unit 101.

In this way, in the embodiment, a request for displaying a message is transmitted to the operational unit 101, based on a processed result or a state of the main unit 102.

On the other hand, a request for releasing a message is transmitted to the operational unit 101 if the cause of transmitting a request for displaying the message has been resolved on the main unit 102. For example, a request for releasing a message is transmitted to the operational unit 101 if an error in a FAX transmission process having occurred on the main unit 102 has been resolved or a predetermined part has been replaced.

At Step S501, if it has been determined that a request for displaying a message has been received by the request reception unit 422, the display determination unit 412 of the UI unit 401 determines the display aspect of the message based on the request for displaying the message (Step S502).

Here, the display determination unit 412 determines the display aspect of the message based on the request for displaying a message based on the message ID included in the request for displaying a message. In other words, the display determination unit 412 refers to the message information stored in the message information storage unit 403, and obtains the display aspect that corresponds to the message ID included in the request for displaying a message, and determines the display aspect of the message.

At Step S502, if it has been determined by the display determination unit 412 that the display aspect of the message is the dialog-displaying based on the request for displaying a message, the display control unit 413 displays the message based on the request for displaying a message, by a dialogue (Step S503).

For example, if the message ID included in the request for displaying a message is "m002", the display control unit 413 refers to the message information stored in the message information storage unit 403, and displays the contents of a message that corresponds to the message ID by a dialogue.

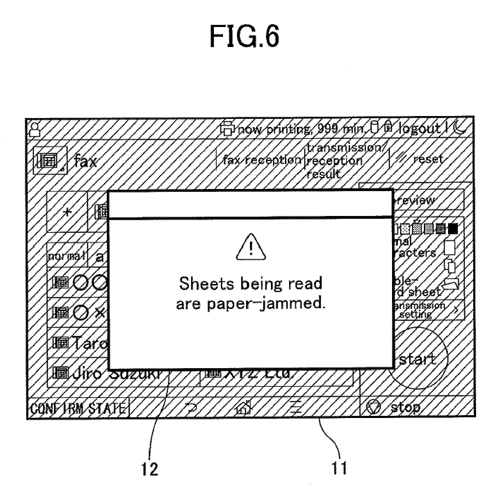

Specifically, the display control unit 413 displays a dialogue 12 reflecting the message represented by the contents of a message, for example, on top of the operational screen 11 displayed on the operational panel 215 as illustrated in FIG. 6. In this way, the display control unit 413 displays the message based on the request for displaying a message by a dialogue.

At Step S502, if it has been determined by the display determination unit 412 that the display aspect of the message is the banner-displaying based on the request for displaying a message, the display control unit 413 displays the message based on the request for displaying a message, by a banner (Step S504).

For example, if the message ID included in the request for displaying a message is "m001", the display control unit 413 refers to the message information stored in the message information storage unit 403, and displays the contents of a message that corresponds to the message ID by a banner. In addition, the display control unit 413 changes the banner reflecting the message dynamically while displaying the banner on the operational panel 215.

At Step S501, if it has been determined by the request reception unit 422 that a request for releasing a message has been received, the display control unit 413 of the UI unit 401 stops displaying a banner or a dialogue that is being displayed on the operational panel 215 (Step S505). In other words, if a banner or a dialogue is being displayed, based on the message ID included in the request for releasing a message, the display control unit 413 stops displaying the banner or the dialogue reflecting the message represented by the contents of message that corresponds to the message ID. In this way, based on a request for releasing a message, the display control unit 413 stops displaying a banner or a dialogue that is being displayed based on the request for displaying a message.

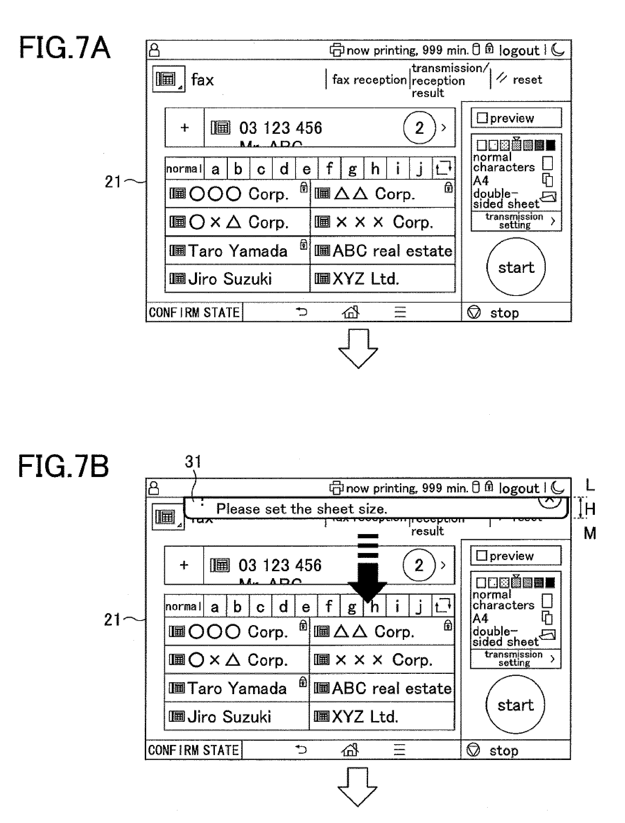

Here, a banner that changes dynamically while being displayed by the display control unit 413 will be described with reference to FIGs. 7A-7E. FIGs. 7A-7E are diagrams illustrating an example of a case in which messages are displayed by a banner.

FIG. 7A illustrates an operational screen 21 displayed on the operational panel 215. At this moment, assume that a request for displaying a message whose display aspect is the "banner-displaying", is received from the main unit 102.

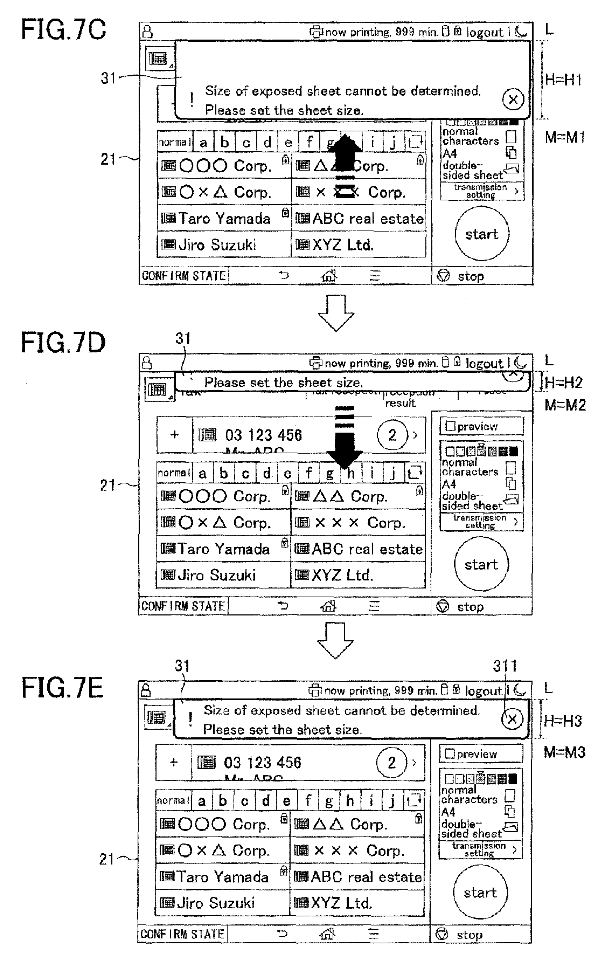

Then, as illustrated in FIGs. 7B and 7C, the display control unit 413 has the upper end L of the banner 31 kept fixed at a predetermined position on the operational screen 21, and moves the lower end M of the banner 31 downwards from a predetermined position to a predetermined first position M1 continuously, to display the banner 31. In other words, the display control unit 413 has the upper end L of the banner 31 kept fixed at the predetermined position on the operational screen 21, and increases the height H of the banner 31 from 0 to a first value H1 continuously, to display the banner 31.

Next, as illustrated in FIG. 7D, the display control unit 413 has the upper end L of the banner 31 kept fixed at the predetermined position on the operational screen 21 in the same way, and moves the lower end M of the banner 31 upwards from the predetermined first position M1 to a predetermined second position M2 continuously, to display the banner 31. In other words, the display control unit 413 has the upper end L of the banner 31 kept fixed at the predetermined position on the operational screen 21 in the same way, and decreases the height H of the banner 31 from the predetermined first value H1 to a predetermined second value H2 continuously, to display the banner 31.

Finally, as illustrated in FIG. 7E, the display control unit 413 has the upper end L of the banner 31 kept fixed at the predetermined position on the operational screen 21 in the same way, and moves the lower end M of the banner 31 downwards from the predetermined first position M2 to a predetermined second position M3 continuously, to display the banner 31. In other words, the display control unit 413 has the upper end L of the banner 31 kept fixed at the predetermined position on the operational screen 21 in the same way, and increases the height H of the banner 31 from the second value H2 to a predetermined third value H3 continuously, to display the banner 31.

As described above, the display control unit 413 continuously changes the height H of the banner 31 from 0 to H1, from H1 to H2, and from H2 to H3, to display the banner 31. Here, the magnitude relationship among H1, H2, and H3 is H2<H3<H1. Thus, the banner 31 is displayed by the display control unit 413, by a ball-bouncing animation. Therefore, the user can recognize that the banner 31 has been displayed, and can notice a message displayed on the banner 31. Note that the height H of the banner 31 may be changed continuously by different speed values of speed V1 from 0 to H1, speed V2 from H1 to H2, and speed V3 from H2 to H3, respectively.

Note that as illustrated in FIGs. 7B-7E, the banner 31 is displayed within a predetermined range at an upper portion of the operational screen 21. Therefore, it is preferable that a message displayed on the banner 31 has contents that prompt the user to operate on the operational screen 21 (for example, a guidance message).

Note that the color of the banner 31 and the iconic figure displayed along with the message on the banner 31 are determined depending on message information that corresponds to the banner 31. It is preferable that the color of the banner 31 has high contrast with respect to the operational screen 21. This makes it possible for the user to recognize that the banner 31 has been displayed more easily.

Also, as illustrated in FIGs. 7A-7E, although the banner 31 in the embodiment is displayed by an animation as if a ball bounces once, the animation is not limited to that; the banner 31 may be displayed, for example, by an animation as if a ball bounces multiple times. In other words, if the banner 31 is displayed, for example, by an animation as if a ball bounces twice, the height H of the banner 31 may be changed from 0 to H1, from H1 to H2, from H2 to H4, from H4 to H5, and from H5 to H3, continuously. Note that the magnitude relationship among H1 to H5 is H2<H5<H3<H4<H1.

Also, although the banner 31 in FIGs. 7A-7E is displayed by an animation as if a ball bounces from the top to the bottom of the operational screen 21, the banner 31 may be displayed by an animation as if a ball bounces, for example, from the bottom to the top of the operational screen 21, or from the left to the right, or from the right to the left of the operational screen 21.

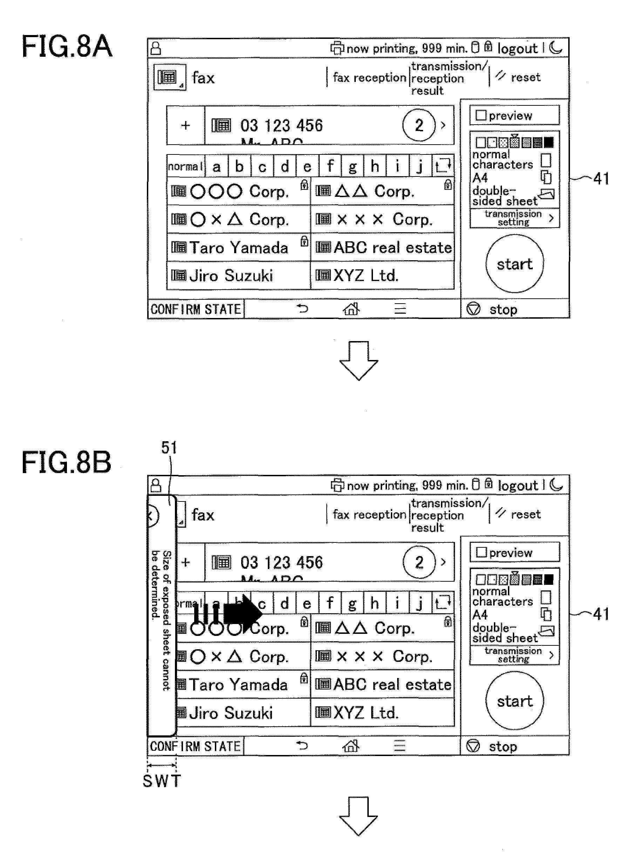

Here, as an example, a case will be described with reference to FIGs. 8A-8E in which a banner is displayed by an animation as if a ball bounces from the left to the right of an operational screen. FIGs. 8A-8E are diagrams illustrating another example of a case in which messages are displayed by a banner.

FIG. 8A illustrates an operational screen 41 displayed on the operational panel 215. At this moment, assume that a request for displaying a message of whose display aspect is the "banner-displaying", is received from the main unit 102.

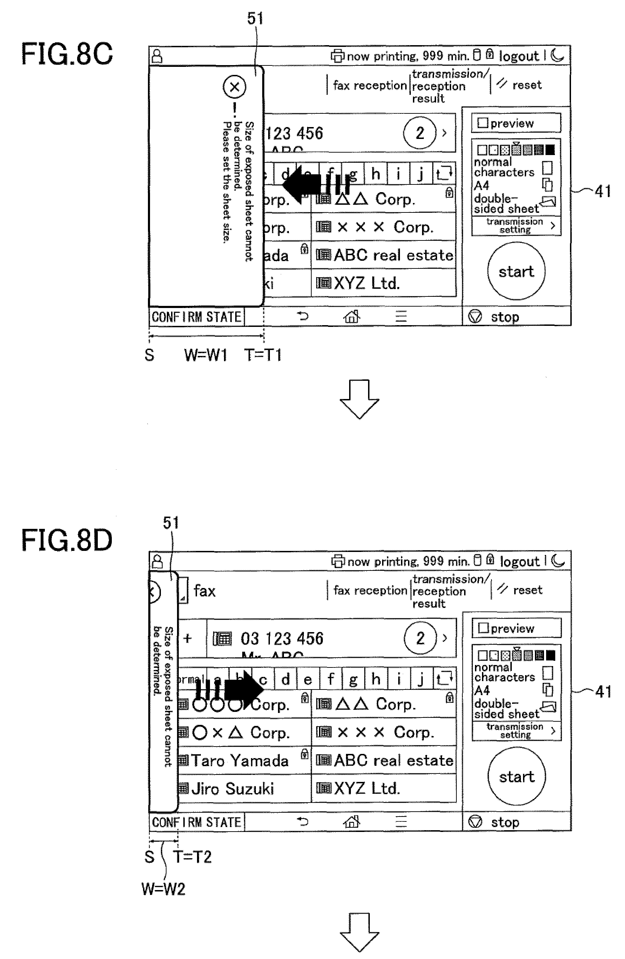

Then, as illustrated in FIGs. 8B and 8C, the display control unit 413 has the left end S of a banner 51 kept fixed at a predetermined position on the operational screen 41, and moves the right end T of the banner 51 rightwards from a predetermined position to a predetermined first position T1 continuously, to display the banner 51. In other words, the display control unit 413 has the left end S of the banner 51 kept fixed at the predetermined position on the operational screen 21, and increases the width W of the banner 51 from 0 to a first value W1 continuously, to display the banner 51.

Next, as illustrated in FIG. 8D, the display control unit 413 has the left end S of the banner 51 kept fixed in the same way, and moves the right end T of the banner 51 leftwards from the predetermined first position T1 to a predetermined second position T2 continuously, to display the banner 51. In other words, the display control unit 413 has the left end S of the banner 51 kept fixed in the same way, and decreases the width W of the banner 51 from the predetermined first value W1 to a predetermined second value W2 continuously, to display the banner 51.

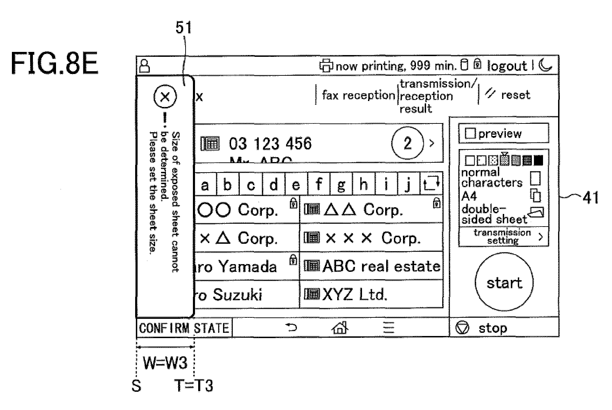

Finally, as illustrated in FIG. 8E, the display control unit 413 has the left end S of the banner 51 kept fixed in the same way, and moves the right end T of the banner 51 rightwards from the predetermined second position T2 to a predetermined third position T3 continuously, to display the banner 51. In other words, the display control unit 413 has the left end S of the banner 51 kept fixed in the same way, and decreases the width W of the banner 51 from the second value W2 to a predetermined third value W3 continuously, to display the banner 51.

As described above, the display control unit 413 continuously changes the width W of the banner 51 from 0 to W1, from W1 to W2, and from W2 to W3, to display the banner 51. Here, the magnitude relationship among W1, W2, and W3 is W2<W3<W1. Thus, the banner 31 is displayed by the display control unit 413, by a ball-bouncing animation from the left to the right.

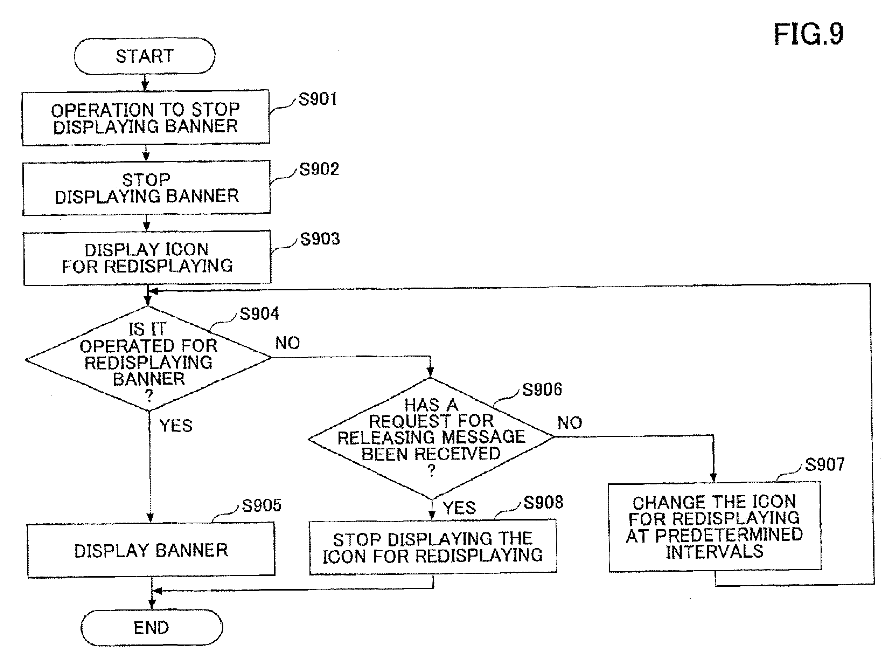

Here, the banner 31 illustrated in FIG. 7E includes a stop-displaying button 311. The user may press (tap) the stop-displaying button 311 of the banner 31 displayed on the operational screen 21, so as not to display the banner 31. In the following, a case will be described with reference to FIG. 9 in which the stop-displaying button 311 of the banner 31 is pressed by the user. FIG. 9 is a flowchart illustrating an example of a process for stopping banner-displaying according to the first embodiment.

The user presses the stop-displaying button 31 of the banner 311 displayed on the operational screen 21 of the operational panel 215, to stop displaying the banner 31 (Step S901). Then, the input reception unit 411 of the UI unit 401 receives the stop-displaying operation.

Once the stop-displaying operation of the banner 31 has been received by the input reception unit 41, the display control unit 413 stops displaying the banner 31 (Step S902). At this moment, the display control unit 413 stops displaying the banner 31, by an animation of the banner 31 sliding from the bottom to the top.

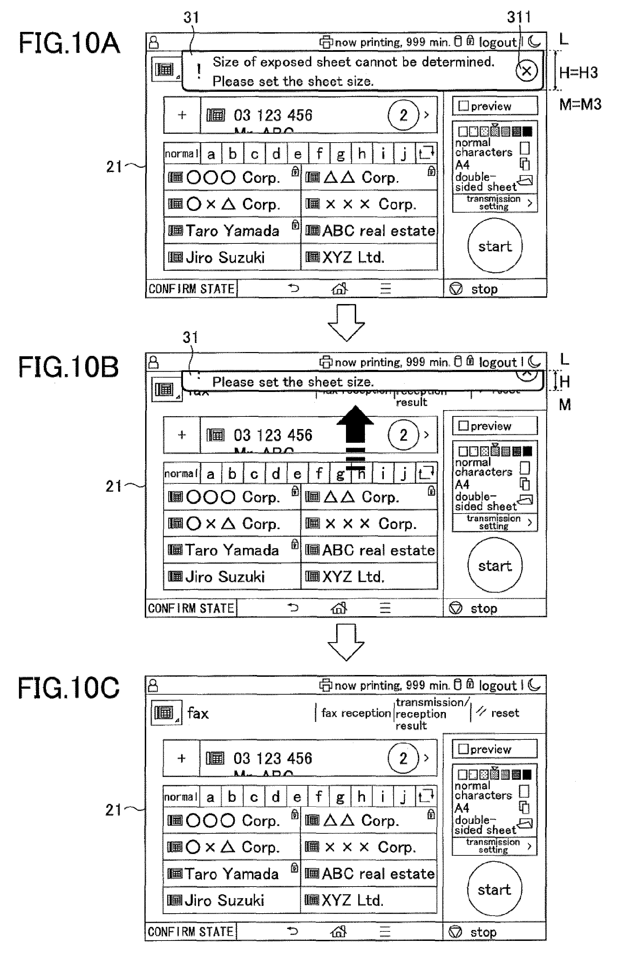

Here, a case will be described with reference to FIGs. 10A-10C in which the display control unit 413 stops displaying a banner while changing the banner dynamically. FIGs. 10A-10C are diagrams illustrating an example of a case in which banner-displaying is stopped.

FIG. 10A illustrates a banner 31 displayed on the operational screen 21 on the operational panel 215. Assume that at this moment, the user presses the stop-displaying button 31 of the banner 311. Note that the upper end L, the lower end M, and the height H of the banner 31 are assumed to be the same as in FIG. 7E.

Then, as illustrated in FIGs. 10B and 10C, the display control unit 413 has the upper end L of the banner 31 kept fixed at the predetermined position on the operational screen 21, and moves the lower end M of the banner 31 upwards from the predetermined third position M3 to a predetermined position (the position of the upper end L) continuously, to stop displaying the banner 31. In other words, the display control unit 413 has the upper end L of the banner 31 kept fixed at the predetermined position on the operational screen 21, and decreases the height H of the banner 31 from a predetermined third value H3 to 0 continuously, to stop displaying the banner 31.

As described above, once the stop-displaying button 311 has been pressed by the user, the display control unit 413 stops displaying the banner 31, by an animation of the banner 31 sliding from the bottom to the top.

Referring back to FIG. 9, after having stopped displaying the banner 31, the display control unit 413 displays an operational object for redisplaying the banner 31 (referred to as an "icon for redisplaying", below) (Step S903). The user may press (tap) the icon for redisplaying, to redisplay the banner 31.

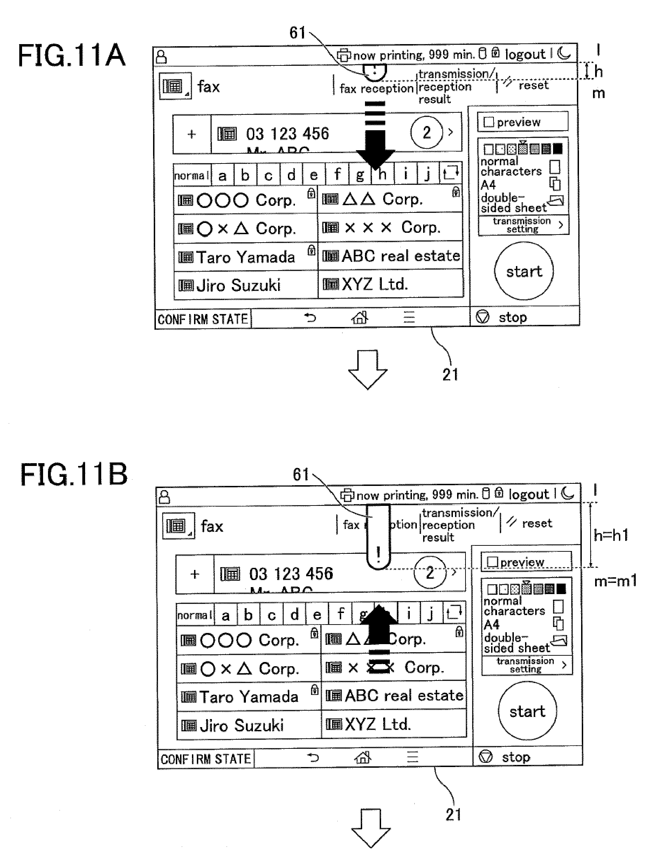

Here, the icon for redisplaying is displayed by a ball-bouncing animation in the same way as for a banner. In the following, a case will be described with reference to FIGs. 11A-11D in which the icon for redisplaying is displayed. FIGs. 11A-11D are diagrams illustrating an example of a case in which the icon for redisplaying is displayed.

Assume that the display control unit 413 has stopped displaying the banner 31. Then, as illustrated in FIGs. 11 A and 11B, the display control unit 413 has the upper end I of the icon for redisplaying 61 kept fixed at a predetermined position on the operational screen 21, and moves the lower end m of the icon for redisplaying 61 downwards from a predetermined position to a predetermined first position m1 continuously, to display the icon for redisplaying 61. In other words, the display control unit 413 has the upper end I of the icon for redisplaying 61 kept fixed at the predetermined position on the operational screen 21, and increases the height h of the icon for redisplaying 61 from 0 to a predetermined first value h1 continuously, to display the icon for redisplaying 61.

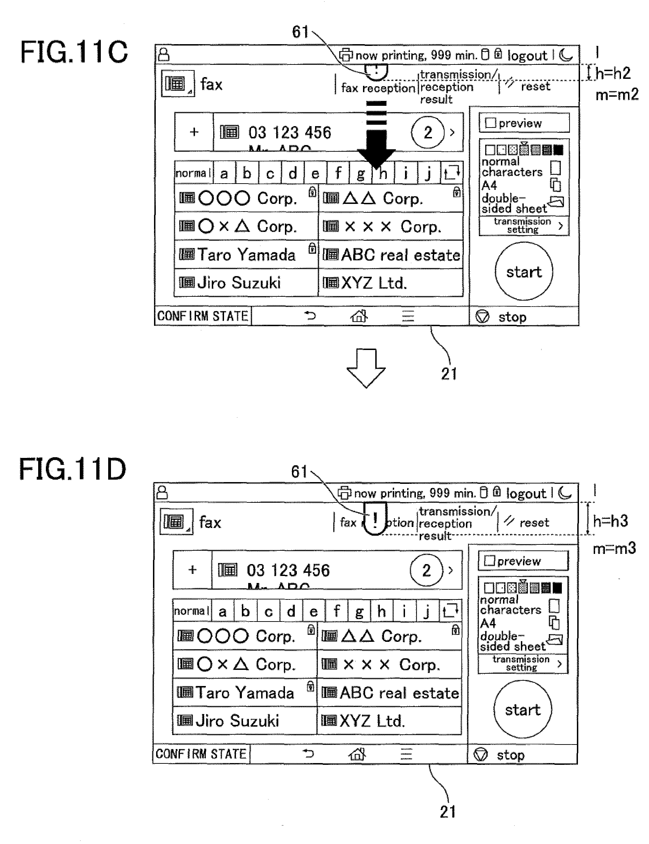

Next, as illustrated in FIG. 11 C, the display control unit 413 has the upper end I of the icon for redisplaying 61 kept fixed in the same way, and moves the lower end m of the icon for redisplaying 61 upwards from the predetermined first position m1 to a predetermined second position m2 continuously, to display the icon for redisplaying 61. In other words, the display control unit 413 has the upper end I of the icon for redisplaying 61 kept fixed in the same way, and decreases the height h of the icon for redisplaying 61 from the predetermined first value h1 to a predetermined second value h2 continuously, to display the icon for redisplaying 61.

Finally, as illustrated in FIG. 11 D, the display control unit 413 has the upper end I of the icon for redisplaying 61 kept fixed in the same way, and moves the lower end m of the icon for redisplaying 61 downwards from the predetermined first position m2 to a predetermined third position m3 continuously, to display the icon for redisplaying 61. In other words, the display control unit 413 has the upper end I of the icon for redisplaying 61 kept fixed in the same way, and increases the height h of the icon for redisplaying 61 from the predetermined second value h2 to a predetermined third value h3 continuously, to display the icon for redisplaying 61.

As described above, the display control unit 413 continuously changes the height h of the icon for redisplaying 61 from 0 to h1, from h1 to h2, and from h2 to h3, to display the icon for redisplaying 61. Here, the magnitude relationship among h1, h2, and h3 is h2<h3<h1. Thus, the icon for redisplaying 61 is displayed by the display control unit 413, by a ball-bouncing animation. Note that the height h of the icon for redisplaying 61 may be changed continuously by different speed values of speed v1 from 0 to h1, speed v2 from h1 to h2, and speed v3 from h2 to h3, respectively.

Note that in the same way as for the banner 31, the display control unit 413 may display the icon for redisplaying 61 by an animation as if a ball bounces, for example, from the bottom to the top of the operational screen 21, or from the left to the right, or from the right to the left of the operational screen 21. Similarly, the icon for redisplaying 61 may be displayed by an animation as if a ball bounces multiple times.

Referring back to FIG. 9, the input reception unit 411 of the UI unit 401 determines whether a redisplay operation of the banner 31 by the user has been received (Step S904). In other words, the input reception unit 411 determines whether the icon for redisplaying 61 has been pressed (tapped) by the user.

At Step S904, if the input reception unit 411 determines that a redisplay operation of the banner 31 by the user has been received, the display control unit 413 redisplays the banner 31 (Step S905). In other words, the display control unit 413 stops displaying the icon for redisplaying 61, and then, redisplays the banner 31. At this moment, the display control unit 413 stops displaying the icon for redisplaying 61 by an animation sliding from the bottom to the top as has been described for the banner 31 with FIGs. 10A-10C. Also, the display control unit 413 redisplays the banner 31 by a ball-bouncing animation as has been described with FIGs. 7A-7E.

At Step S904, if the input reception unit 411 has not received a redisplay operation, the cooperation unit 402 determines whether a request for releasing a message from the main unit 102 has been received by the request reception unit 422 (Step S906).

At Step S906, if it has been determined that a request for releasing a message has not been received by the request reception unit 422, the display control unit 413 changes display of the icon for redisplaying 61 at predetermined time intervals (Step S907). In other words, the display control unit 413 displays the icon for redisplaying 61 by a vibrating animation at predetermined time intervals.

At Step S906, if it has been determined that a request for releasing a message has been received by the request reception unit 422, the display control unit 413 of the UI unit 401 stops displaying the icon for redisplaying 61 that is being displayed on the operational panel 215 (Step S908). In other words, based on the message ID included in the request for releasing a message, the display control unit 413 stops displaying the icon for redisplaying 61 to redisplay the banner that corresponds to the message ID. In this way, based on a request for releasing a message, the display control unit 413 stops displaying the icon for redisplaying to redisplay the banner based on a request for displaying a message.

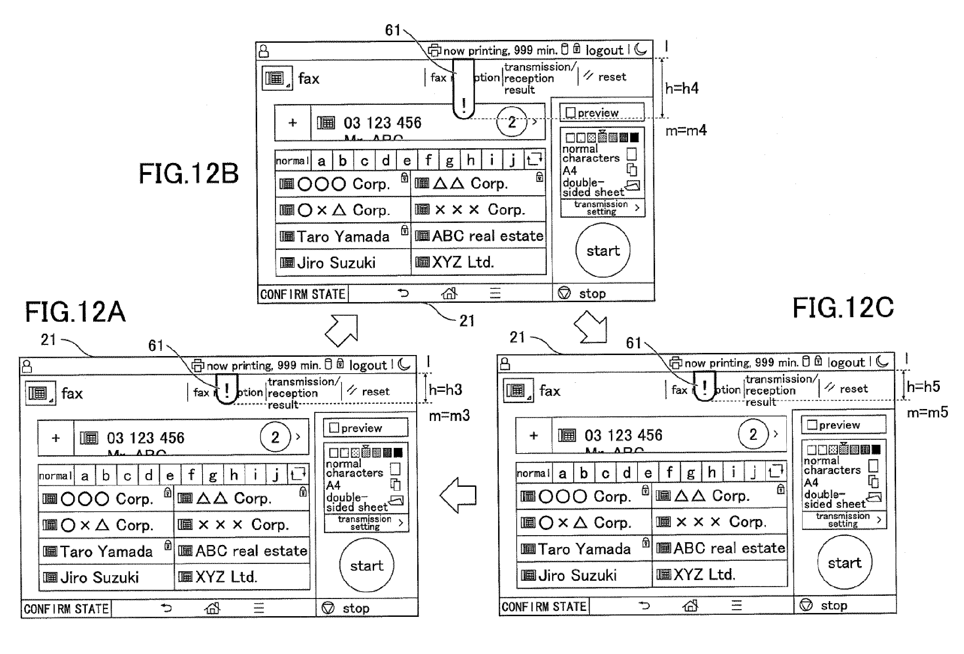

Here, a case will be described with reference to FIGs. 12A-12C in which display of the icon for redisplaying 61 is changed at Step S907. FIGs. 12A-12C are diagrams illustrating an example of a case in which the icon for redisplaying 61 changes.

FIG. 12A illustrates the icon for redisplaying 61 displayed on the operational screen 21 of the operational panel 215. At this moment, assume that the predetermined time interval has passed.

Then, as illustrated in FIG. 12B, the display control unit 413 has the upper end I of the icon for redisplaying 61 kept fixed at the predetermined position on the operational screen 21, and moves the lower end m of the icon for redisplaying 61 downwards from the predetermined position to a predetermined fourth position m4 continuously, to display the icon for redisplaying 61. In other words, the display control unit 413 has the upper end I of the icon for redisplaying 61 kept fixed at the predetermined position on the operational screen 21, and increases the height h of the icon for redisplaying 61 from 0 to a predetermined fourth value h4 continuously, to display the icon for redisplaying 61.

Next, as illustrated in FIG. 12C, the display control unit 413 has the upper end I of the icon for redisplaying 61 kept fixed in the same way, and moves the lower end m of the icon for redisplaying 61 upwards from the predetermined fourth position m4 to a predetermined fifth position m5 continuously, to display the icon for redisplaying 61. In other words, the display control unit 413 has the upper end I of the icon for redisplaying 61 kept fixed in the same way, and decreases the height h of the icon for redisplaying 61 from the predetermined fourth value h4 to a predetermined fifth value h5 continuously, to display the icon for redisplaying 61.

Finally, the display control unit 413 has the upper end I of the icon for redisplaying 61 kept fixed in the same way, and moves the lower end m of the icon for redisplaying 61 downwards from the predetermined fifth position m5 to the predetermined third position m3 continuously, to display the icon for redisplaying 61. In other words, the display control unit 413 has the upper end I of the icon for redisplaying 61 kept fixed in the same way, and increases the height h of the icon for redisplaying 61 from the predetermined fifth value h5 to a predetermined third value 3 continuously, to display the icon for redisplaying 61.

As described above, the display control unit 413 continuously changes the height h of the icon for redisplaying 61 from h3 to h4, from h4 to h5, and from h5 to h3, to display the icon for redisplaying 61. Here, the magnitude relationship among h3, h4, and h5 is h5<h3<h4. Thus, the icon for redisplaying 61 is displayed by the display control unit 413, by a vibrating animation at predetermined time intervals. Therefore, the user can notice existence of the banner 31 whose banner-displaying is stopped. Note that the height h of the icon for redisplaying 61 may be changed continuously by different speed values of speed v4 from h3 to h4, speed v5 from h4 to h5, and speed v6 from h5 to h3, respectively.

As described above, the image processing apparatus 100 in the embodiment displays a message by a banner in response to a request for displaying an error message or a guidance message that is to be displayed by a banner. Further, the image processing apparatus 100 in the embodiment displays a banner reflecting a message by a ball-bouncing animation. This makes it possible for the user to notice easily that an error message or a guidance message has been displayed.

Also, if having stopped displaying a banner, the image processing apparatus 100 in the embodiment displays an icon for redisplaying to redisplay the banner. In addition, the image processing apparatus 100 in the embodiment displays the icon for redisplaying by a vibrating animation at predetermined time intervals. This makes it possible for the user to notice easily that there is an error message or a guidance message whose displaying is stopped for the moment.

### [Second embodiment]

Next, an image processing apparatus 100 will be described according to a second embodiment. The second embodiment will described with respect to different points from the first embodiment. Elements having substantially the same functional configurations as in the first embodiment are assigned the same codes as used in the description of the first embodiment, and their description is omitted.

In the embodiment, the operational unit 101 receives multiple requests for displaying messages from the main unit 102, and displays messages, based on the respective requests for displaying messages.

### <Details of processes>

Next, processes of the image processing apparatus 100 in the second embodiment will be described in detail.

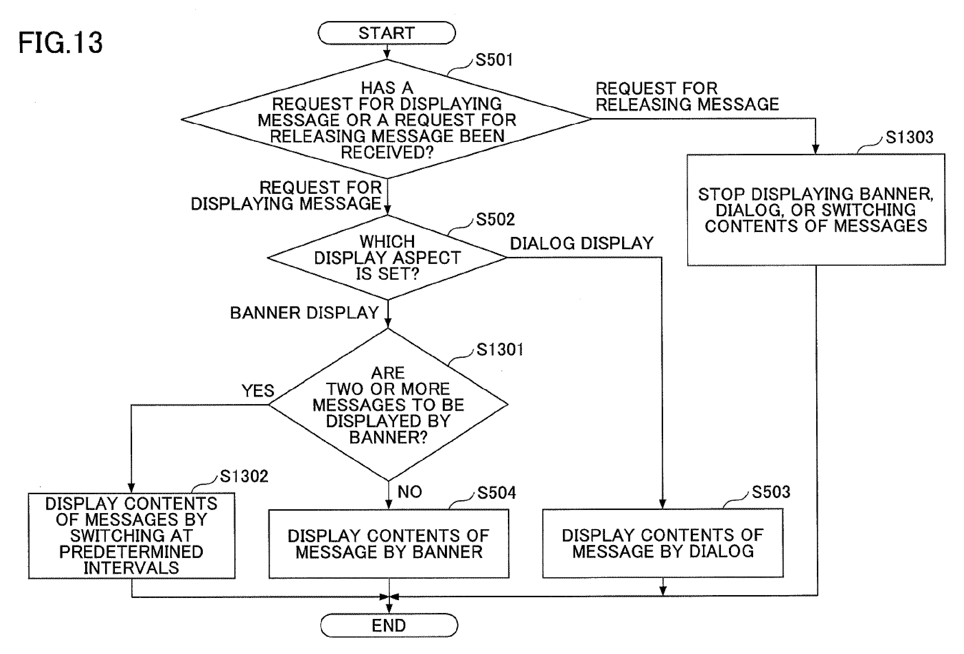

First, a process will be described with reference to FIG. 13 in which the operational unit 101 of the image processing apparatus 100 displays, in response to receiving multiple requests for displaying messages from the main unit 102, messages that correspond to the requests for displaying messages on the operational panel 215 of the operational unit 101. FIG. 13 is a flowchart of an example of the process for displaying messages according to the second embodiment.

If it has been determined at Step S502 by the display determination unit 412 that the display aspect of a message is the banner-displaying based on a request for displaying a message, the display control unit 413 determines whether two or more messages are to be displayed by a banner (Step S1301). In other words, for example, if having received a request for displaying a message whose the display aspect is the banner-displaying, the display control unit 413 determines whether another message has been already displayed by a banner.

If it has been determined at Step S1301 by the display control unit 413 that two or more messages are to be displayed by a banner, the display control unit 413 displays the contents of messages by switching the messages at predetermined time intervals (Step S1302).

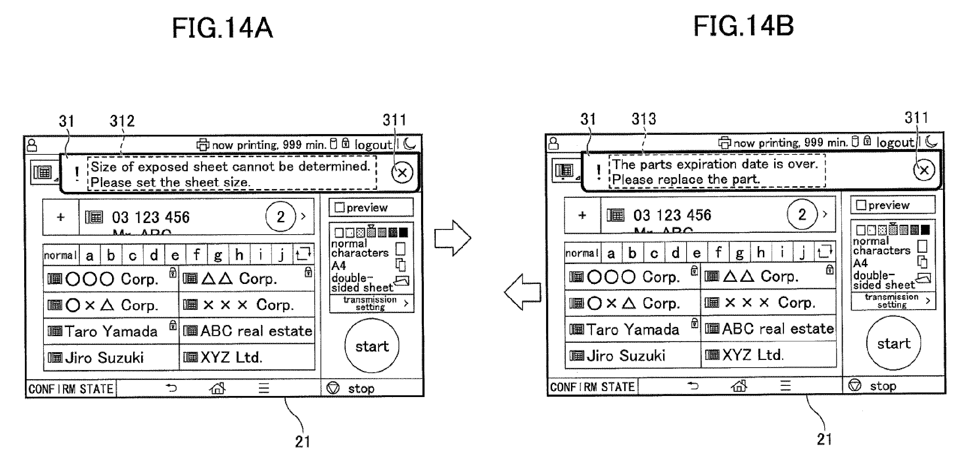

Here, a case will be described with reference to FIGs. 14A-14B in which the contents of messages are displayed by switching the messages at predetermined time intervals. FIGs. 14A-14B are diagrams illustrating an example of a case in which multiple messages are displayed by a banner.

As illustrated in FIG. 14A, assume that a banner 31 reflecting a message 312 is displayed on the operational screen 21. At this moment, also assume that the operational unit 101 receives a request for displaying a message that includes, for example, the message ID "m004", from the main unit 102.

Then, as illustrated in FIG. 14B, the display control unit 413 displays the banner 31 reflecting a message 313 on the operational screen 21 after a predetermined time has passed. Further, the display control unit 413 displays the banner 31 reflecting the message 312 on the operational screen 21 after another predetermined time has passed.

Referring back to FIG. 13, if it has been determined at Step S501 by the request reception unit 422 that a request for releasing a message has been received, the display control unit 413 of the UI unit 401 executes one of the following processes (1) to (3) (Step S1303).
(1) Stop displaying a banner.
(2) Stop displaying a dialogue.
(3) Among messages to be switched and reflected on the banner, stop displaying a corresponding message.

Here, the processes (1) and (2) have been described with Step S505 in FIG. 5. As for the above process (3), based on the message ID included in a request for releasing a message, the display control unit 413 stops displaying a message among messages to be switched and reflected on the banner, which is represented by the contents of a message corresponding to the message ID. In this way, among multiple messages to be switched and reflected on the banner, the display control unit 413 stops displaying only a message that relates to a request for releasing a message.

As described above, in response to receiving multiple requests for displaying messages, the display control unit 413 in the embodiment displays messages based on the respective requests for displaying messages, by switching the messages on the banner 31 at predetermined time intervals. This makes it possible to display multiple error messages by one banner on the operational unit 101 if multiple errors occur, for example, in the main unit 102.

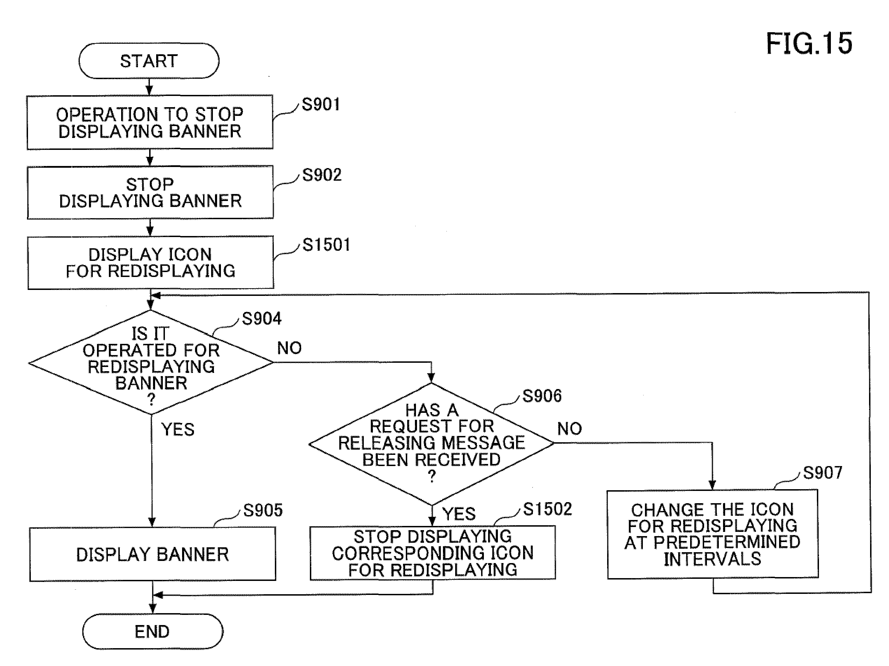

Here, the banner 31 illustrated in FIG. 14A and FIG. 14B includes the stop-displaying button 311 as in the first embodiment. The user may press (tap) the stop-displaying button 311 of the banner 31 displayed on the operational screen 21, so as not to display the banner 31. In the following, a case will be described with reference to FIG. 15 in which the stop-displaying button 311 of the banner 31 is pressed by the user. FIG. 15 is a flowchart illustrating an example of a process for stopping banner-displaying according to the second embodiment.

After having stopped displaying the banner 31, the display control unit 413 displays an icon for redisplaying to redisplay the banner 31 (Step S1501). At this moment, the display control unit 413 may display just one icon for redisplaying, or multiple icons for redisplaying, depending on the number of messages to be displayed (namely, messages based on the requests for displaying messages).

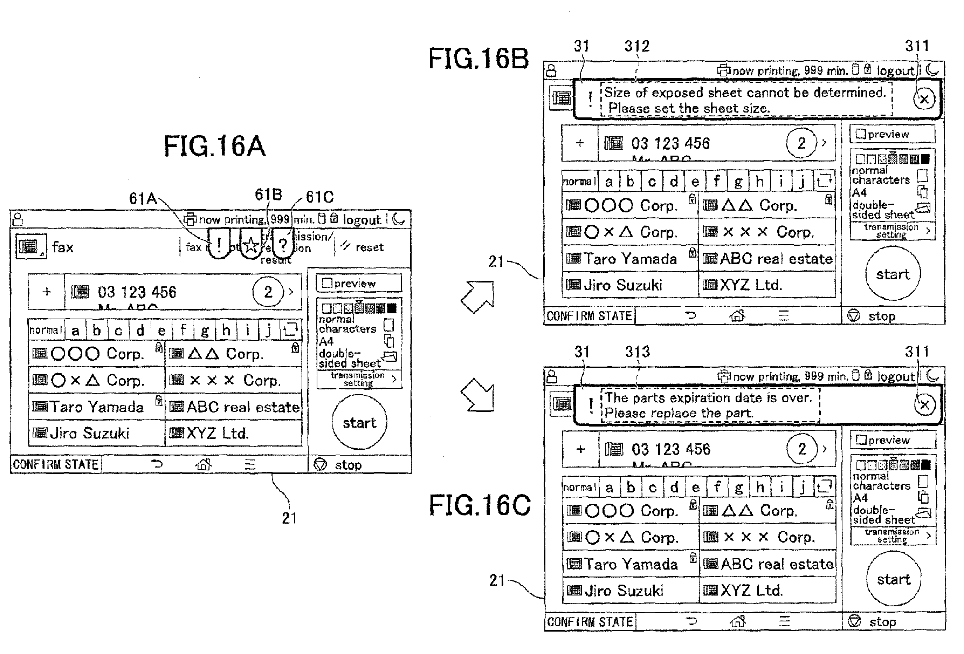

Here, as an example, a case will be described with reference to FIGs. 16A-16C in which there are three messages to be displayed, and three icons for redisplaying are displayed. FIGs. 16A-16C are diagrams illustrating an example of a case in which a banner corresponding to an icon for redisplaying is redisplayed.

In FIG. 16A, an icon for redisplaying 61 A and an icon for redisplaying 61 B are displayed on the operational screen 21, which correspond to respective messages to be displayed.

The icon for redisplaying 61A is an icon for redisplaying to redisplay a banner 31 reflecting the message 312. Therefore, as illustrated in FIG. 16B, if user presses the icon for redisplaying 61 A, the banner 31 reflecting the message 312 is redisplayed on the operational screen 21.

The icon for redisplaying 61 B is an icon for redisplaying to redisplay a banner 31 reflecting the message 313. Therefore, as illustrated in FIG. 16C, if user presses the icon for redisplaying 61 B, the banner 31 reflecting the message 313 is redisplayed on the operational screen 21.

The icon for redisplaying 61C is an icon for redisplaying to redisplay a banner 31 corresponding to the icon for redisplaying 61C.

Note that on the icons for redisplaying 61 A to 61C, the iconic figures that correspond to banners to be redisplayed are displayed, respectively. In other words, the iconic figure "!" is displayed on the icon for redisplaying 61 A, and similarly, the iconic figures of the star mark and "?" are displayed on the icons for redisplaying 61 B and 61C, respectively.

Referring back to FIG. 15, if it has been determined at Step S906 by the request reception unit 422 that a request for releasing a message has been received, the display control unit 413 of the UI unit 401 stops displaying a corresponding icon for redisplaying that is being displayed on the operational panel 215 (Step S1502). In other words, based on the message ID included in the request for releasing a message, the display control unit 413 stops displaying the icon for redisplaying to redisplay the banner that corresponds to the message ID. Especially, if multiple icons for redisplaying are displayed, the display control unit 413 stops displaying an icon for redisplaying to redisplay the banner that corresponds to the message ID, among multiple icons for redisplaying.

As described above, if there are multiple messages to be displayed and reflected on a banner, the image processing apparatus 100 in the embodiment displays the multiple messages to be displayed by switching the messages at predetermined time intervals. This makes it possible for the user to confirm the multiple messages.

Also, the image processing apparatus 100 in the embodiment may display icons for redisplaying that correspond to messages to be displayed. This makes it possible for the user to know the number of error messages and guidance messages whose displaying is stopped, and to redisplay a desired message among these messages.

Note that although it is assumed that an icon for redisplaying is displayed by the same color and iconic figure as those for the banner to be redisplayed by the icon for redisplaying, the color and iconic figure are not limited to those. In other words, the color or the iconic figure of an icon for redisplaying may be different from those for the banner to be redisplayed by the icon for redisplaying.

As described above, in the embodiments in the present disclosure, the operational panel 215 of the operational unit 101 included in the image processing apparatus 100 is taken as an example, to describe processes for displaying a message(s) on a screen on the operational panel 215, but the application is not limited to the image processing apparatus 100. The embodiments in the present disclosure can be applied in substantially the same way to a process for displaying a message on a screen of various electronic devices having a display unit, for example, a smart phone, a tablet terminal, a game device, and a PC.

Thus, the embodiments of the present invention have been described in detail. Note that the present invention is not limited to the specific embodiments, but various modifications and improvements can be made within the scope of the present invention described in the claims.

### [Related-Art Documents]

### [Patent Documents]

[Patent Document 1] Japanese Unexamined Patent Application Publication No. 2014-179038

The present application claims priority under 35 U.S.C. § 119 to Japanese Patent Application No. 2015-137164, filed July 8, 2015, the contents of which are incorporated herein by reference in their entirety.

## Claims

1. An information processing apparatus that includes a display unit configured to display a message for indicating information to a user, comprising:
a determination unit (412) configured to determine, when displaying the message on the display unit, whether to display the message on the display unit by a predetermined display aspect; and
a display control unit (413) configured to display, when it has been determined by the determination unit (412) that the message is to be displayed on the display unit by the predetermined display aspect, the message on the display unit while dynamically changing a region having the message reflected.

2. The information processing apparatus according to claim 1, wherein the display control unit (413) stops displaying the region having the message reflected in response to a command by the user to stop displaying the region, and displays an operational object to redisplay the region on the display unit while dynamically changing the operational object.

3. The information processing apparatus according to claim 1 or 2, wherein the display control unit (413) displays the region on the display unit while dynamically changing an area of the region.

4. The information processing apparatus according to claim 2 or 3, wherein the display control unit (413) displays the operational object on the display unit while dynamically changing an area of the operational object.

5. The information processing apparatus according to claim 3 or 4, wherein the display control unit (413) displays the region on the display unit while increasing the area of the region up to a predetermined first value continuously,
displays the region on the display unit while decreasing the area of the region from the predetermined first value down to a predetermined second value continuously, and
displays the region on the display unit while increasing the area of the region from the predetermined second value up to a predetermined third value continuously.

6. The information processing apparatus according to claim 3, 4 or 5, wherein the display control unit (413) displays the region on the display unit while dynamically changing at least one of width and height of the region.

7. The information processing apparatus according to claim 4, 5 or 6, wherein the display control unit (413) displays the operational object on the display unit while increasing the area of the operational object up to a predetermined fourth value continuously,
displays the operational object on the display unit while decreasing the area of the operational object from the predetermined fourth value down to a predetermined fifth value continuously, and
displays the operational object on the display unit while increasing the area of the operational object from the predetermined fifth value up to a predetermined sixth value continuously.

8. The information processing apparatus according to any one of claims 1 to 7, wherein the region is a banner.

9. An information processing apparatus that includes a main unit configured to execute image processing, and a display unit configured to display a message for indicating information to a user in response to a request for displaying the message from the main unit, the information processing apparatus (100) comprising:
a determination unit (412) configured to determine, when displaying the message on the display unit in response to the request for displaying the message from the main unit and based on the request for displaying the message, whether to display the message on the display unit by a predetermined display aspect; and
a display control unit (413) configured to display, when it has been determined by the determination unit (412) that the message is to be displayed on the display unit by the predetermined display aspect, the message on the display unit while dynamically changing a region having the message reflected.

10. A user interface for indicating information to a user, the user interface comprising:
a first display element configured to have a message for indicating the information to the user reflected, and to be displayed by a display aspect in which an area of a region of the first display element is dynamically changed.

11. The user interface according to claim 10, further comprising:
a second display element configured to redisplay the first display element in response to a command by the user to stop displaying the first display element, and to be displayed by a display aspect in which an area of a region of the second display element is dynamically changed.
